# EUROPEAN PATENT APPLICATION

(11) **EP 4 756 060 A1**
(43) Date of publication of application: **10.06.2026**
(21) Application number: 25739183.9
(22) Date of filing: 13.01.2025
(51) Int. Cl.: C22C 38/14, C22C 38/12, C22C 38/02, C22C 38/04, B21D 22/20, H01M 50/107, H01M 50/119

(54) **CARBON STEEL MATERIAL, HIGH-STRENGTH METAL CAN, AND SECONDARY BATTERY CONTAINED THEREIN**

(30) Priority: 12.01.2024 KR 20240005689; 16.01.2024 KR 20240006990; 06.01.2025 KR 20250001572; 10.01.2025 KR 20250004275
(71) Applicant: LG Energy Solution, Ltd., Seoul 07335 (KR)
(72) Inventor: CHOI, Seongwoo, Daejeon 34122 (KR); DO, Jin Uk, Daejeon 34122 (KR); PARK, Sangjoon, Daejeon 34122 (KR); KIM, Jaewoong, Daejeon 34122 (KR)
(74) Representative: Goddar, Heinz J.
(86) International application number: PCT/KR2025/000720
(87) International publication number: WO 2025/151015

(57) **Abstract**

High-strength carbon steel suitable as a material for a can for secondary batteries, a metal can manufactured by processing the same, and secondary batteries manufactured by accommodating an electrode assembly in the can are provided. A material for manufacturing the metal can is provided in the form of a meal plate. The metal can is manufactured by subjecting the meal plate to deep drawing. The metal can is manufactured from a carbon steel containing a precipitation strengthening element including Nb in a ratio of more than 0.05 wt% and 0.100 wt% or lower. The carbon steel contains C in a ratio of 0.01 wt% or higher and 0.100 wt% or lower. The carbon steel contains Mn in a ratio of 0.1 wt% or higher and 0.5 wt% or lower. The carbon steel contains Si in a ratio of more than 0.001 wt% and 0.5 wt% or lower.

## Description

### [TECHNICAL FIELD]

This application claims the benefit of priority based on Korean Patent Application No. 10-2024-0005689 filed on January 12, 2024, Korean Patent Application No. 10-2024-0006990 filed on January 16, 2024, Korean Patent Application No. 10-2025-0001572 filed on January 6, 2025, and Korean Patent Application No. 10-2025-0004275 filed on January 10, 2025, entire content disclosed in the document of the patent applications is included as a part of this specification.

The present invention relates to high-strength carbon steel suitable as a material for a can for secondary batteries, a metal can made of the carbon steel and secondary batteries using the same.

### [BACKGROUND ART]

A can-type battery cell, such as a cylindrical battery cell, is a structure wherein a jelly-roll-type electrode assembly is accommodated in a metal can, which is more resistant to shock and temperature than a pouch-type battery. Accordingly, the demand for using can-type cells for battery packs for vehicles is increasing.

A battery can is manufactured by subjecting a metal sheet to deep drawing and trimming the front end of the side wall.

A cylindrical battery cell is a structure wherein an electrode assembly is accommodated in a metal can as described above, and has sufficient rigidity even at a cell level, and since the surface of the cell is made of metal, it has excellent heat transfer efficiency and is also advantageous for cooling using a cooling fluid. However, since a conventional cylindrical battery cell has a small size, a large number of cells are used to obtain the electric capacity required for an electric vehicle. When a large number of cells are installed in a vehicle where weight reduction directly affects driving range, it is difficult to reduce the vehicle weight due to the weight of the metal can itself. In addition, there is the inconvenience of connecting all the electrode terminals of a large number of small cells with a bus bar.

In order to resolve this inconvenience, the enlargement of cylindrical battery cells has been in progress recently, and in particular, a method of directly mounting a can-type battery cell without a battery module in a battery pack of an electric vehicle is being reviewed.

As the dimension of the cylindrical battery cell increases, the electric capacity increases according to the volume thereof while the battery can increases according to the area thereof such that the electric capacity of the electrode assembly with respect to the weight of the battery can is expected to increase. However, since the explosive power of high-capacity battery cell also increases according to the volume thereof during thermal runaway, contrary to the above expectations, the thickness of the metal can must be secured to sufficiently increase the strength of the can. Accordingly, the weight of the metal can also increases as much as the increase in electric capacity.

To overcome such technical limitation, a method of manufacturing a large battery can using high-strength steel plates may be considered. However, due to the nature of the can manufacturing method that uses deep drawing to plastically process meal plates, a higher-power press must be used for can molding in order to manufacture cans using high-strength steel plates, and the strength of the mold itself must also be higher. That is, the production cost and difficulty increase as high-strength steel plates are used.

In addition, as the strength of metal materials increases, the elongation tends to decrease accordingly. Therefore, when the high-strength steel plates described above are used as raw materials for cans, the formability of the cans will decrease accordingly.

Moreover, the environment that requires the strength of cylindrical battery cells to be high is thermal runaway rather than a general room temperature environment. Since the temperature of the battery cell rises to 500°C and above during thermal runaway, the battery can must have higher strength in a high-temperature environment.

In addition, electrodes and electrolyte solutions are accommodated in the battery can, and cause battery reactions as a secondary battery is repeatedly charged and discharged. Therefore, the battery can must have high corrosion resistance so as not to be affected by such battery reaction.

Conventionally, tungsten (W) was added to carbon steel in an appropriate ratio to improve corrosion resistance and high-temperature properties. However, tungsten is a material that reduces ductility, and addition of tungsten worsens the formability of battery cans that require deep drawing of meal plates.

In addition, titanium (Ti), which suppresses grain growth at high temperatures, was added to improve high-temperature properties. However, titanium increases the recrystallization temperature, which reduces heat treatment operability and deteriorates plating properties.

### [DISCLOSURE]

### [TECHNICAL PROBLEM]

The present invention proposes the following technical problem to be solved described above.

A large-capacity cylindrical battery can requires high strength during thermal runaway wherein temperature reaches 500°C or higher rather than a room temperature environment or a generally estimated environment.

Since a large-capacity cylindrical battery can is manufactured by deep drawing, high strength, which the steel industry is focusing on developing, is not required in a room temperature environment. That is, in a room temperature environment, considering the workability of the can, an improvement in elongation is required more than an improvement in strength.

On the other hand, when thermal runaway occurs, the pressure inside a can rapidly increases such that a very large tensile stress is applied in the circumferential direction of the can. In contrast, the metal structure of the can, which must resist such pressure, has the characteristic of large plastic deformation occurring in the axial direction due to the deep drawing process. That is, the metal structure of a can that underwent the deep drawing must resist a tensile force in a direction orthogonal to the direction in which extreme plastic deformation occurs.

That is, what is required from a material for a large-capacity cylindrical battery can is not to have significantly high strength in a room temperature environment, but not to be drastically reduced in a high temperature environment of 500°C or higher although the strength in a room temperature environment is not that high,. For example, a metal with a room temperature strength of 700 and a high temperature strength of 500 is more suitable as a material for a battery can than a metal with a room temperature strength of 1000 and a high temperature strength of 300.

It is an object of the present invention to provide a can metal material that has excellent formability in a can forming processing such as deep drawing and minimal strength degradation in a high temperature environment of 500°C or higher.

It is an object of the present invention to provide a metal can for secondary batteries in a sheet form that may be subjected to deep drawing.

In addition, a can for secondary batteries is required to have excellent formability and high temperature properties, while also having corrosion resistance that is not affected by the battery reaction of secondary batteries. Moreover, while having excellent corrosion resistance, it is desirable to have excellent room temperature formability and high temperature strength.

It is an object of the present invention to provide a can metal material having excellent formability, high temperature properties, and corrosion resistance, a metal can for secondary batteries manufactured using the same, and secondary batteries using the metal can.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above described problems, the present invention provides a can material for a battery cell that secures the formability of a metal can with guaranteed corrosion resistance while also having excellent high-temperature strength.

The can material may be provided in a sheet form processable by deep drawing.

According to the present invention, a precipitation strengthening element capable of delaying a recrystallization is added to carbon steel used as a can material for secondary batteries to suppress the growth of crystal grains. Accordingly, the metal can has high strength even in a high-temperature environment of 500°C or higher, which is a thermal runaway environment of secondary batteries.

The precipitation strengthening element may be an element other than the five major elements of carbon steel.

The precipitation strengthening element may be added to carbon steel that contains at least C (carbon) among the five major elements based on Fe (iron).

The carbon steel to which the precipitation strengthening element is added may secure both rollability and strength in a balanced manner.

The precipitation strengthening elements bonds with C (carbon) of carbon steel to generate precipitates and suppress grain growth. This may reduce the brittleness of the metal can, increase ductility, improve room temperature strength, and improve formability, and further improve high temperature strength.

The ratio of C contained in the carbon steel may be 0.01 wt% or higher and 0.100 wt% or lower.

Preferably, the ratio of C contained in the carbon steel may be 0.02 wt% or higher and 0.07 wt% or lower.

More preferably, the ratio of C contained in the carbon steel may be 0.03 wt% or higher and 0.05 wt% or lower.

When the carbon content exceeds the above range, the rollability and formability are degraded, and when the carbon content below the above range, it is difficult to secure the required strength.

The carbon steel may further contain Mn (manganese).

Mn may be added to the carbon steel in the range of 0.1 wt% or higher and 0.5 wt% or lower, and preferably, Mn may be added to the carbon steel in the range of 0.15 wt% or higher and 0.3 wt% or lower. Accordingly, strength may be increased and hot cracking may be prevented.

When the manganese content exceeds the above range, ductility, corrosion resistance, and plating degradation may occur, and when the manganese content is below the above range, hot cracking may occur.

The carbon steel may further contain Si (silicon).

Si may be added to the carbon steel in the range of more than 0.001 wt% and 0.5 wt% or less, and preferably, Si may be added to the carbon steel in the range of 0.01 wt% or higher and 0.02 wt% or lower.

When the silicon content exceeds the above range, there is a risk of ductility degradation.

The carbon steel may further contain P (phosphorus).

P may be added to the carbon steel in a range of more than 0.001 wt% and less than 0.02 wt%, and preferably, P may be added to the carbon steel in a range of 0.003 wt% or higher and 0.008 wt% or lower. Accordingly, strength and corrosion resistance may be improved.

When the phosphorus content exceeds the above range, ductility degradation and plating degradation may occur, and when the phosphorus content is below the above range, there is a risk of strength degradation and corrosion resistance degradation.

The carbon steel may further contain S (sulfur)

The microstructure of low-carbon steel containing the five major elements begins to change from 500°C, which causes a decrease in strength. When the precipitation strengthening element is added to the carbon steel, the added precipitation strengthening element bonds with C of the carbon steel to form precipitates, thereby increasing the room temperature ductility of the carbon steel, and inhibiting the growth of crystal grains at high temperatures to improve the high temperature strength of the carbon steel.

The precipitation strengthening elements may be added to the carbon steel in the range of more than 0 wt% and 0.1 wt% or lower. Specifically, the precipitation strengthening elements may be added to the carbon steel in the range of 0.001 wt% or higher and 0.100 wt% or lower.

The precipitation strengthening elements may contain at least one element selected from a group consisting of Ti (titanium) and Nb (niobium). Accordingly, room temperature strength and high temperature strength may be improved, and room temperature ductility may be increased.

Preferably, the precipitation strengthening elements may include Nb.

Nb bonds with C of the carbon steel to form precipitates. Accordingly, the room temperature formability of the carbon steel may be improved, and the growth of crystal grains in the carbon steel and the decrease in strength in a high temperature environment may be suppressed. That is, Nb further improves the room temperature formability and high temperature strength of the metal can. In particular, Nb improves the curvature formability, thereby further improving the formability of the deep drawing process of the carbon steel sheet for forming the battery can.

In addition, Nb significantly enhances the corrosion resistance of the carbon steel suitable for secondary batteries by forming a thin oxide layer on the surface of the carbon steel, thereby increasing the electrolytic resistance and corrosion resistance.

Nb may be added to the carbon steel in a range of more than 0.001 wt% to 0.100 wt% or lower. Preferably, Nb may be added to the carbon steel in a range of 0.003 wt% or higher and 0.09 wt% or lower.

Nb may be added to the carbon steel in the range of more than 0.001 wt% and 0.100 wt% or lower. Preferably, Nb may be added to the carbon steel in the range of 0.003 wt% or higher and 0.09 wt% or lower.

More preferably, Nb may be added to the carbon steel in the range of 0.05 wt% or higher and 0.07 wt% or lower. Accordingly, the tensile strength at room temperature may be improved while further improving the elongation, and the tensile strength at high temperature may be improved while further improving the elongation.

When Nb content exceeds 0.07 wt%, the effect of improving corrosion resistance is minimal, while the room temperature strength of the carbon steel is degraded such that it is difficult to secure the required high temperature strength even when the degradation of the high temperature strength of the carbon steel is suppressed. When Nb is less than 0.05 wt%, the effect of improving the formability of the carbon steel is degraded, and the effect of suppressing grain growth at high temperatures is insufficient such that grains grow even at temperatures lower than 600°C, failing to meet the required high temperature strength, and the electrolytic resistance and corrosion resistance are weakened, resulting in reduced corrosion resistance.

Optionally, the precipitation strengthening elements may include Ti.

Ti preferentially bonds with elements such as carbon and nitrogen dissolved in the carbon steel to form TiN and Ti carbides, thereby improving the room temperature formability. In addition, the fine precipitates suppress grain growth at high temperatures, thereby improving the high temperature strength.

Ti may be added to the carbon steel in the range of more than 0.001 wt% and 0.100 wt% or lower. Preferably, Ti may be added to the carbon steel in the range of 0.01 wt% or higher and 0.07 wt% or lower.

More preferably, Ti may be added to the carbon steel in the range of 0.03 wt% or higher and 0.05 wt% or lower. Accordingly, it is possible to further improve the tensile strength at room temperature while improving the elongation, and to further improve the tensile strength at high temperatures. When X content exceeds 0.05 wt%, the grain growth inhibition effect required for the high-temperature environment of about 600°C no longer increases, making heat treatment of the carbon steel difficult and degrading the plating property. When X content is less than 0.03 wt%, the grain growth effect is not expressed.

The carbon steel containing the precipitation strengthening element may be subjected to alloying heat treatment.

Specifically, the carbon steel is provided in the form of a metal sheet with a metal dissimilar to the carbon steel plated on one side or two sides of the sheet.

Additionally, the plated carbon steel may be subjected to heat treatment.

The dissimilar metal may include Ni (nickel).

The metal sheet may be subjected to deep drawing. Accordingly, the metal sheet may have a bottom and a tube-shaped side wall connected to the bottom and extending in the direction of drawing (axial direction).

The front end of the side wall may be trimmed, and thus the axial dimension of the side wall may be regulated.

The bottom may be pierced, and thus a hole may be formed at the bottom.

In some embodiments, the hole may be a liquid injection port for injecting an electrolyte solution into a can of the battery.

The liquid injection port may be closed after the injection of the electrolyte solution.

Alternatively, the hole may be a terminal fixing hole to which a terminal connected to an electrode of an electrode assembly accommodated in the can of the battery is fixed.

A rivet terminal may be fixedly attached to the terminal fixing hole, and a gasket may be interposed between the rivet terminal and the bottom. The can may be electrically insulated from the rivet terminal and sealed by the gasket.

The open end of the can may be sealed by covering with a cap with the electrode assembly accommodated in the can.

In order to achieve this, the front end of the side wall may be sealed by and bonded to the edge of the cap.

In one embodiment, a bead, which is a portion of the side wall recessed radially inward, is provided near the front end of the side wall, the edge of the cap is placed on the bead 11B in axial direction, the front end of the side wall is crimped radially inward, and the edge of the tab may be pressed axially inward.

A gasket may be interposed between the edge of the cap and the side wall of the can. The edge of the cap and the end portion of the side wall of the can may be sealed by the gasket. Optionally, the gasket may electrically insulate the cap from the can.

In another embodiment, the front end of the side wall may be sealed by and bonded to the edge of the cap.

The bonding may be achieved by melting.

The melting may be accomplished by welding. Specifically, the welding may be seam laser welding.

The melting may be accomplished by melting at least one of the cap and the can.

The melting may be accomplished by melting the solder paste.

The melting may be accomplished by melting the brazing filler metal.

### [ADVANTAGEOUS EFFECTS]

According to the present invention, by adding a precipitation strengthening element to the can material of carbon steel, the recrystallization temperature is increased, thereby suppressing the growth of crystal grains to secure the room temperature strength of the metal can for secondary batteries manufactured thereby as well as sufficient high temperature strength. Accordingly, a more robust can for secondary batteries may be provided even in a thermal runaway environment.

According to the present invention, by adding a precipitation strengthening element containing Ti or Nb to the can material of carbon steel, the room temperature elongation may be improved, thereby enhancing the workability of the can material.

In addition, according to the present invention, by adding a precipitation strengthening element containing Ti or Nb to the can material of carbon steel, both the room temperature strength and high temperature strength of the battery can may be increased.

According to the present invention, by adding a precipitation strengthening element containing Nb to the can material of carbon steel, the tensile strength at high temperatures is improved while securing the high temperature elongation, thereby maximally suppressing the breakage of the battery can in a high temperature environment due to the thermal runaway of the battery cell.

According to the present invention, by adding a precipitation strengthening element including Nb to the can material of carbon steel, the corrosion resistance of the battery can for secondary batteries may be significantly improved.

According to the present invention, by adding a precipitation strengthening element including Ti to the can material of carbon steel, the tensile strength at both room temperature and high temperature may be further improved.

In addition to the advantageous effects described above, specific effects of the present invention will be described further while describing specific details of the present invention.

### [BRIEF DESCRIPTION OF DRAWINGS]

FIG. 1 is a cross-sectional view of a carbon steel plate for manufacturing a battery can.
FIG. 2 is a cross-sectional view of a battery can formed by subjecting the plate of FIG. 1 to deep drawing.
FIG. 3 is a cross-sectional view of a battery can trimmed and cut at the front end of the side wall of the battery can of FIG. 2.
FIG. 4 is a cross-sectional view of an electrode assembly accommodated in the battery can of FIG. 3.
FIG. 5 is a cross-sectional view of an open end of a battery can of FIG. 4 sealed and closed with a cap assembly.
FIG. 6 is a cross-sectional view of a hole formed by piercing the bottom of a battery can of FIG. 3.
FIG. 7 is a cross-sectional view of a rivet terminal fixed to the hole of a battery can of FIG. 6.
FIG. 8 is a cross-sectional view of an electrode assembly accommodated in the battery can of FIG. 7.
FIG. 9 is a cross-sectional view of an open end of a battery can of FIG. 8 sealed and closed with a cap.
FIG. 10 is a cross-sectional view of the battery can of FIG. 7 with the electrode assembly accommodated therein.
FIG. 11 is a cross-sectional view of the battery can of FIG. 10 with the open end sealed with a cap.
FIG. 12 is an enlarged photographic image of the metal can structure of the embodiment and the comparative example.

### [DESCRIPTION OF REFERENCE NUMERALS]

| | | | |
|---|---|---|---|
| 10: | can | 10St: | metal sheet, metal plate |
| 10Ni: | coated portion | 11: | side wall |
| 11B: | bead | 11C: | crimped portion |
| 12: | bottom | 13: | hole |
| 20: | electrode assembly | 21: | first current collector plate |
| 22: | second current collector plate | 30: | cap assembly, cap |
| 41: | gasket | 42: | gasket |
| 50: | insulator | 60: | rivet terminal |
| 91: | blank holder | 92: | punch |
| T: | trimming | C: | cutting |
| P: | piercing | W: | bonding |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiment, "axial direction" refers to the extending direction of the side wall of the can manufactured by subjecting a metal sheet to deep drawing, "radial direction" refers to the direction toward or away from the axis, and "circumferential direction" refers to the direction surrounding the axis.

Hereinafter, an embodiment of a high-strength metal can according to the present invention will be described.

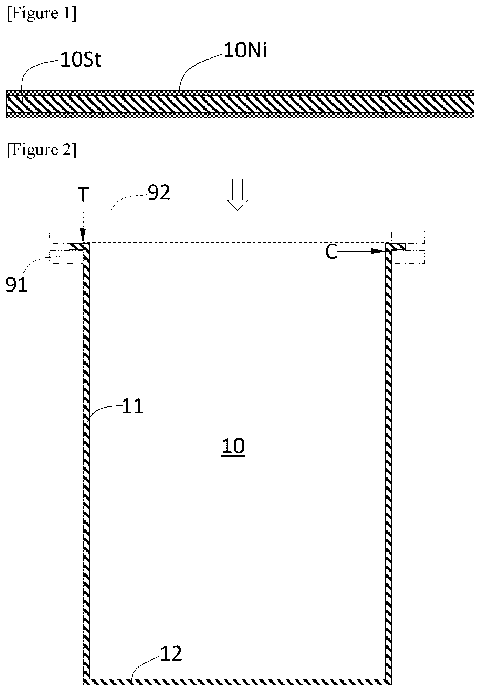

The process of manufacturing a battery can includes first preparing NPS (Nickel Plated Steel) in which nickel 10Ni is plated on the surface of a meal plate 10St having a sheet from as shown in FIG. 1, and subjecting the NPS to deep drawing to form a circular bottom 12 and a circular tube-shaped side wall 11 connected thereto as shown in FIG. 2.

Thereafter, as shown in FIG. 2, a flange at the front end of the side wall 11 held by a blank holder 91 and trimmed (denoted as T) by a punch 92 to finish forming the front end of the side wall 11 of the battery can 10. The height of the battery can 10 may be determined by the trimming process or may be determined through a process such as cutting (denoted as C) that may be additionally performed thereafter.

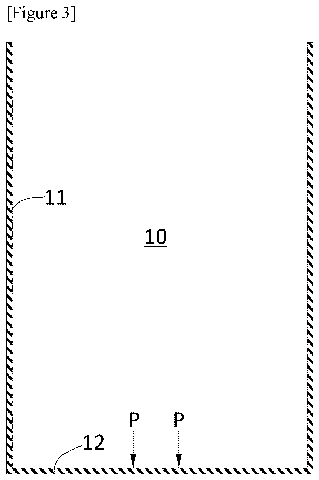

Accordingly, the metal can 10 may include a bottom 12 and a side wall 11 extending from the edge thereof in the drawing direction or axial direction as shown in FIG. 3.

While the meal plate which is a plated plate of a heterogeneous metal is exemplified in the embodiment, it is not necessary that the meal plate is a plated plate. In addition, alloying heat treatment may be further performed when necessary.

The battery cell of the embodiment may be, for example, a cylindrical battery cell whose form factor ratio (defined as the diameter of the cylindrical battery cell divided by the height, that is, the ratio of the diameter Φ to the height H) is greater than approximately 0.4.

Here, the form factor refers to values representing the diameter and the height of a cylindrical battery cell. The cylindrical battery cell may be, for example, a 46800 cell and a 46950 cell. In the values representing the form factor, the first two numbers represent the diameter of the cell, the next two numbers represent the height of the cell, and the last number 0 represents that the cross-section of the cell is circular.

The battery cell may be an approximately cylindrical cell with a diameter of approximately 46 mm, a height of approximately 80 mm and a form factor ratio of 0.575.

The battery cell may be an approximately cylindrical cell with a diameter of approximately 46 mm, a height of approximately 95 mm and a form factor ratio of 0.484.

The battery cell may be an approximately cylindrical cell with a diameter of approximately 46 mm, a height of approximately 110 mm and a form factor ratio of 0.418.

The battery cell may be an approximately cylindrical cell with a diameter of approximately 48 mm, a height of approximately 75 mm and a form factor ratio of 0.640.

The battery cell may be an approximately cylindrical cell with a diameter of approximately 48 mm, a height of approximately 110 mm and a form factor ratio of 0.436.

The battery cell may be an approximately cylindrical cell with a diameter of approximately 48 mm, a height of approximately 80 mm and a form factor ratio of 0.600.

The present invention may be apparently applied to battery cells with a form factor ratio of approximately 0.4 or lower, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

Hereinafter, a first embodiment of a secondary battery using a battery can 10 will be described.

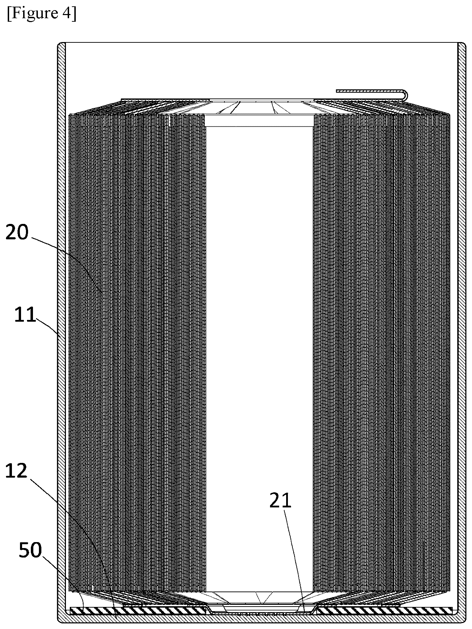

Referring to FIG. 4, a jelly-roll-shaped electrode assembly 20 wound in a cylindrical shape is inserted into a metal can 10, and a first electrode tab or a first current collector plate 21 electrically connected to the first electrode of the electrode assembly 20 is bonded to the bottom 12 to electrically connect the first electrode and the can 10. Accordingly, the can 10 may have a polarity corresponding to the first electrode of the electrode assembly 20. When necessary, an annular insulator 50 may be interposed between the first current collector plate 21 and the bottom 12 to facilitate bonding.

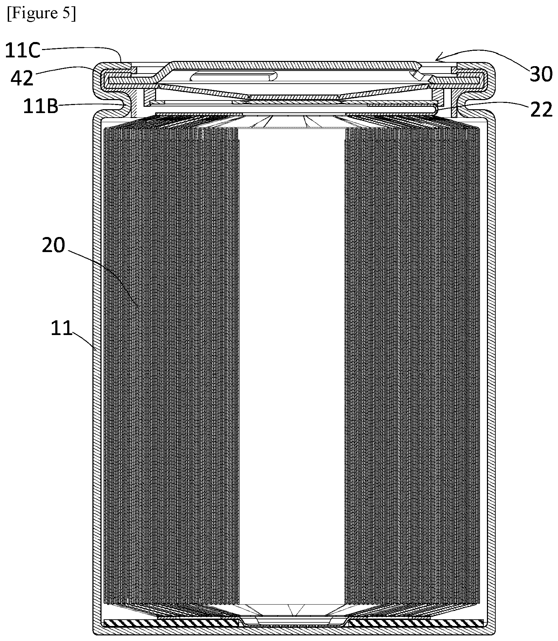

In addition, as shown in FIG. 5, a second electrode tab or a second current collector plate 22 electrically connected to the second electrode of the electrode assembly 20 is bonded to a cap assembly 30 to electrically connect the second electrode and the cap assembly 30. Accordingly, the cap assembly 30 may have a polarity corresponding to the second electrode of the electrode assembly.

Referring to FIG. 5, an open end of the can 10 is coupled to the cap assembly 30 and sealed. In order to achieve this, a bead 11B is formed near the front end of the side wall 11 of the can 10 by compressing the side wall 11 radially inward. Thereafter, the cap assembly 30 is placed on the bead 11B in axial direction, and the front end of the side wall 11 is crimped radially inward to form a crimped portion 11C. The crimped portion 11C presses the edge of the cap assembly 30 axially inward. A gasket 42 is interposed between the edge of the cap assembly 30 and the side wall 11 to electrically insulate the edge of the cap assembly 30 and the side wall 11 and seal the open end of the can 10.

Hereinafter, a second embodiment of secondary batteries using a battery can 10 will be described.

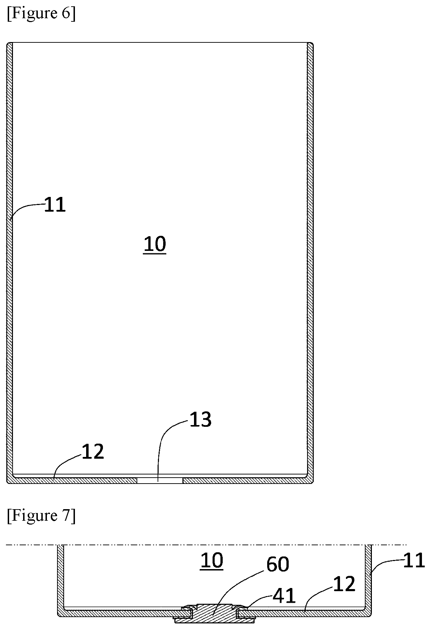

The bottom 12 of the metal can 10 is subjected to a piercing process P as shown in FIG. 3 to form a hole 13 at the bottom 12 of the metal can 10 as shown in FIG. 6. A rivet terminal 60 may be fixed to the hole 13 as shown in FIG. 7. Here, a first gasket 41 is interposed between the rivet terminal 60 and the bottom 12 defining the hole 13. Accordingly, the rivet terminal 60 and the can 10 are electrically insulated and the hole 13 is sealed.

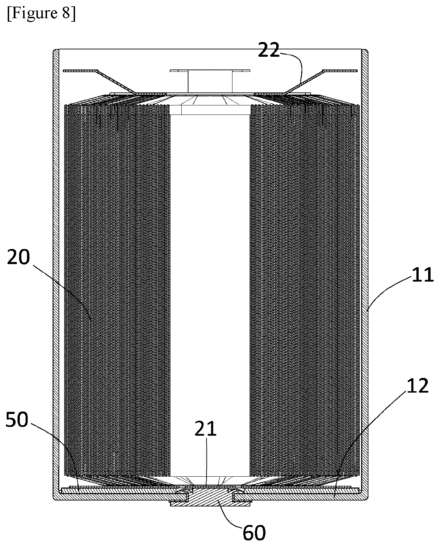

Thereafter, as shown in FIG. 8, an insulator 50 exposing the rivet terminal 60 is placed at the bottom 12 of the metal can 10, and an electrode assembly 20 is inserted. And the first current collector plate 21 electrically connected to the first electrode of the electrode assembly 20 is bonded to the rivet terminal 60 to electrically connect the first electrode and the rivet terminal 60. Accordingly, the rivet terminal 60 may have a polarity corresponding to the polarity of the first electrode of the electrode assembly 20.

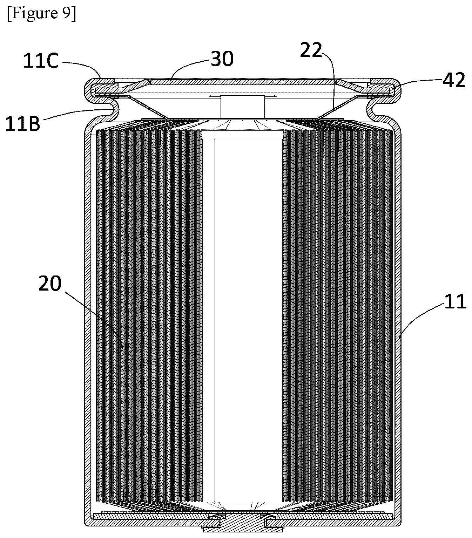

In addition, as shown in FIG. 9, the side wall 11 of the can 10 is formed by radially compressing the side wall 11 inward near the front end of the side wall 11 to form the bead 11B. Thereafter, the second current collector plate 22 electrically connected to the second electrode of the electrode assembly 20 is placed on and bonded to the bead 11B in axial direction as necessary to electrically connect the second electrode and the can 10. Accordingly, the can 10 may have a polarity corresponding to the polarity of the second electrode.

Thereafter, the cap 30 is placed on the bead 11B in axial direction, and the front end of the side wall 11 is crimped radially inward to form the crimped portion 11C. The crimped portion 11C presses the edge of the cap 30 axially inward. A second gasket 42 is interposed between the edge of the cap 30 and the side wall 11 to electrically insulate the edge of the cap 30 and the side wall 11 and seal the open end. Accordingly, the cap 30 may be non-polar.

Hereinafter, a third embodiment of a secondary battery using the battery can 10 will be described.

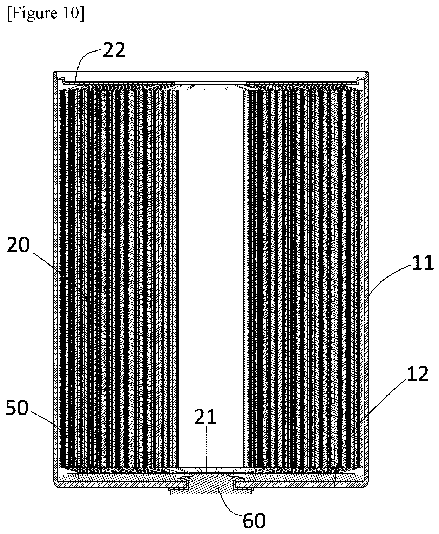

In the battery can 10 of FIG. 7 where the rivet terminal 60 is fixed to the bottom 12 thereof, the insulator 50 exposing the rivet terminal 60 is placed at the bottom 12 as shown in FIG. 10, and the electrode assembly 20 is then inserted. Thereafter, the first current collector plate 21 electrically connected to the first electrode of the electrode assembly 20 is bonded to the rivet terminal 60 to electrically connect the first electrode and the rivet terminal 60 such that the rivet terminal 60 has a polarity corresponding to the polarity of the first electrode of the electrode assembly 20.

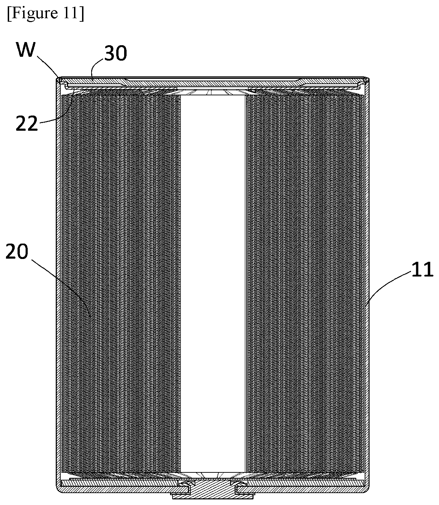

Thereafter, as shown in FIG. 11, the open end of the can 10 is sealed with a cap 30. The edge of the cap 30 may be sealed by being welded to the front end of the side wall 11. Here, the second current collector plate 22 electrically connected to the second electrode of the electrode assembly 20 may be subjected to welding W together with the welded area of the side wall 11 and the cap 30 such that the can 10 and the cap 30 may have a second polarity.

The metal constituting the meal plate, which is the material for the battery can 10, may be Fe-based carbon steel.

The carbon steel contains C (carbon). C may be added to the carbon steel in the range of 0.01 wt% or higher and 0.100 wt% or lower. Preferably, C may be added to the carbon steel in the range of 0.02 wt% or higher and 0.07 wt% or lower. More preferably, C may be added to the carbon steel in the range of 0.03 wt% or higher and 0.05 wt% or lower. Such low-carbon steel has the ductility and elongation required for forming a can for secondary batteries, and has sufficient room temperature strength required for a can for secondary batteries.

The carbon steel may contain Mn (manganese). Mn may be added to the carbon steel in the range of 0.1 wt% or higher and 0.5 wt% or lower. Preferably, Mn may be added to the carbon steel in the range of 0.15 wt% or higher and 0.3 wt% or lower.

The carbon steel may further contain Si (silicon). Si may be added to the carbon steel in the range of more than 0.001 wt% and 0.5 wt% or less. Preferably, Si may be added to the carbon steel in the range of 0.01 wt% or higher and 0.02 wt% or lower.

The carbon steel may further contain P (phosphorus). P may be added to the carbon steel in a range of more than 0.001 wt% and less than 0.02 wt%. Preferably, P may be added to the carbon steel in a range of 0.003 wt% or higher and 0.008 wt% or lower.

The carbon steel may further contain S (sulfur). S may be added to the carbon steel in a range of less than 0.001 wt%. Preferably, S may be added to the carbon steel in a range of less than 0.0001 wt%.

Carbon steel contains precipitation strengthening elements X and Y. The precipitation strengthening elements X and Y may contain at least one element selected from a group consisting of Ti and Nb. Preferably, the precipitation strengthening element X may be Ti, and the precipitation strengthening element Y may be Nb.

Changes in the microstructure, which causes a degradation in strength, occurs in carbon steel containing the five major elements from 500°C. That is, there is a limit to the improvement in strength simply by adjusting the contents of the five major elements of carbon steel. Therefore, the high-temperature strength of the conventional carbon steel may be significantly reduced compared to the room-temperature strength thereof. This weakens the stability of the battery cell, which is especially necessary during thermal runaway.

The precipitation strengthening elements X and Y added to the carbon steel bond with C of the carbon steel to generate nano-sized precipitates XC and YC such as TiC and NbC to inhibit the growth of grains.

The precipitation strengthening elements X and Y not only improve the room temperature strength of the can material, but also improve the high-temperature strength of the can material. In the embodiment, the high-temperature strength refers to the strength of the material at 500°C or higher.

Here, the improved strength may be, for example, tensile strength. Accordingly, a cylindrical battery cell manufactured with the can material may have high fracture strength at both room temperature and high temperature.

At least some of the precipitation strengthening element X may further improve the high-temperature strength compared to the degree of improvement in room temperature strength of the can material.

Accordingly, while securing the processability of the can material at room temperature, it is also possible to secure the strength of the metal can that is capable of resisting the internal pressure of the battery cell at high temperature.

The precipitation strengthening elements X and Y improve the room temperature elongation of the can material.

Accordingly, the formability for manufacturing a can with the can material may be further improved.

At least some of the precipitation strengthening element Y further enhances the high-temperature elongation of the can material.

Accordingly, the metal can of the cylindrical battery cell, which is in a high-temperature environment during thermal runaway, etc., may further secure the margin to elongate in response to the high internal pressure. Accordingly, the internal pressure may be alleviated, and the fracture resistance may be improved.

In addition, at least some of the precipitation strengthening element Y significantly enhances the corrosion resistance of the carbon steel suitable for secondary batteries by forming a thin oxide layer on the surface of the carbon steel, thereby increasing the electrolytic resistance and corrosion resistance.

The precipitation strengthening elements X and Y may be added to the carbon steel in a range of more than 0.001 wt% and 0.100 wt% or less. Preferably, the precipitation strengthening elements may be added to the carbon steel in a range of 0.01 wt% or higher and 0.09 wt% or lower.

Preferably, at least some of the precipitation strengthening element X may be added to the carbon steel in the range of 0.01 wt% or higher and 0.07 wt% or lower, and more preferably in the range of 0.03 wt% or higher and 0.05 wt% or lower. Accordingly, the tensile strength at room temperature may be improved while improving the elongation, and the tensile strength at high temperature may be further improved.

When X content exceeds 0.05 wt%, the grain growth inhibition effect required for the high-temperature environment of about 600°C no longer increases, making heat treatment of the carbon steel difficult and degrading the plating property. When X content is less than 0.03 wt%, the grain growth effect is not expressed.

Preferably, at least some of the precipitation strengthening element Y may be added to the carbon steel in the range of 0.03 wt% or higher and 0.09 wt% or lower, and more preferably in the range of 0.05 wt% or higher and 0.07 wt% or lower.

Accordingly, the tensile strength at room temperature may be improved while further improving the elongation, and the tensile strength at high temperature may be improved while further improving the elongation.

When Y content exceeds 0.07 wt%, the effect of improving the corrosion resistance is minimal while the room temperature strength of the carbon steel is reduced such that it is difficult to secure the required high-temperature ultimate strength even when the reduction in the high-temperature strength of the carbon steel is suppressed. When Y content is less than 0.05 wt%, the effect of improving the formability of carbon steel is reduced, and the grain growth inhibition effect at high temperatures is insufficient such that grains grow even at temperatures lower than 600°C, which does not satisfy the required high-temperature ultimate strength, and the electrolytic resistance and corrosion resistance are weakened, resulting in degraded corrosion resistance.

The structure deformed by the forming process is transformed into an equiaxed structure in a high-temperature environment, and thus the strength is reduced. Therefore, the high-temperature strength is bound to be reduced compared to the room-temperature strength of the general carbon steel.

When the can material of the carbon steel according to the embodiment is subjected to deep drawing, the metal structure is elongated in the lengthwise direction of the can. Such metal structure of the can is transformed into a spherical grain structure in a high-temperature environment, and the strength is degraded. Here, the larger the size of the grains formed due to the structure deformation is than the grain size of the original material, the more the strength is degraded.

In the can material according to the embodiment, the precipitation strengthening element bonds with C at high temperature to form precipitates, thereby suppressing the growth of crystal grains. Accordingly, in the carbon steel containing the precipitation strengthening element as in the embodiment, to begin recrystallization, a higher temperature must be reached, resulting in higher recrystallization temperature.

Accordingly, the metal can of the cylindrical battery cell, which is heated to approximately 500°C during thermal runaway, may undergo delayed recrystallization only at a temperature higher than 500°C, and thus the growth of crystal grains is suppressed, thereby suppressing the degradation in high-temperature strength compared to room-temperature strength.

That is, a cylindrical battery cell using a can manufactured from a metal plate of carbon steel material may have high strength at both room temperature and high-temperature.

### <EMBODIMENT OF CAN MATERIAL>

Hereinafter, an embodiment of the can material according to the present invention will be described.

The alloy compositions of the carbon steel of the first embodiment, the carbon steel of the second embodiment, and the carbon steel of the comparative example are as follows.

**[Table 1]**

| Wt% | Fe | C | Mn | Si | Ti(X) | Nb(Y) |
|---|---|---|---|---|---|---|
| Comparative example | Bal. | 0.039 | 0.18 | 0.013 | - | - |
| first embodiment | Bal. | 0.034 | 0.17 | 0.014 | 0.043 | - |
| second embodiment | Bal. | 0.041 | 0.18 | 0.014 | - | 0.063 |

First, the carbon steel of the comparative example has the composition of C_{0.03}Mn_{0.2}Si_{0.01}, and the precipitation strengthening elements X and Y were added thereto, and the can steel plates for secondary batteries of the first embodiment having the final composition of C_{0.03}Mn_{0.2}Si_{0.01}Ti(X)_{0.05} and the can steel plates for secondary batteries of the second embodiment having the final composition of C_{0.03}Mn_{0.2}Si_{0.01}Nb(Y)_{0.05} were manufactured (S01). Thereafter, the steel plates were maintained at 500°C for 10 minutes, and then air-cooled in the air to manufacture test specimens. These test specimens were manufactured in the same manner at 550°C, 600°C, and 650°C (S02).

In order to conduct a structural analysis of the test specimens manufactured as above, each test specimen was cut, molded, polished, and etched to manufacture a test specimen for structural analysis (S03).

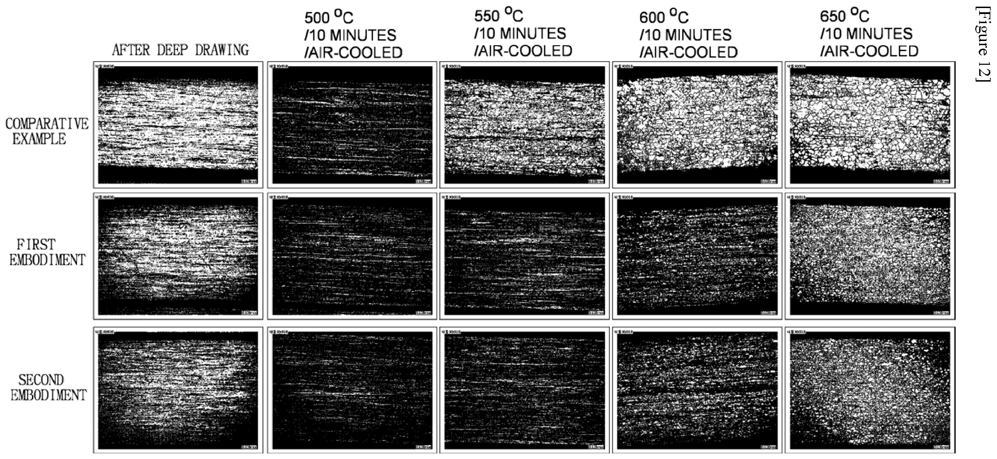

Thereafter, using an optical microscope, the specimen for tissue analysis was observed at the same magnification (S04). The tissue observed accordingly is as shown in FIG. 12.

Referring to FIG. 12, it is confirmed that the steel plate of the comparative example began to recrystallize from 500°C. On the other hand, it is confirmed that the steel plates of the first embodiment and the second embodiment began to recrystallize only when a temperature of around 600°C is reached. That is, the steel plate of the comparative example began to recrystallize at around 500°C, which is a temperature that is usually reached during thermal runaway. However, the steel plates of the first embodiment and the second embodiment began to recrystallize only when a higher temperature of 600°C is reached.

Meanwhile, it is confirmed that all alloys of the comparative example, the first embodiment, and the second embodiment were recrystallized at 650°C. However, it is confirmed that recrystallization of the steel plates of the first embodiment and the second embodiment were delayed due to the precipitation strengthening element such that the growth of crystal grains was suppressed, thereby refining the crystal grains compared to the comparative example.

Thereafter, for the test specimens, the tensile strength and elongation were measured for the steel plate before heat treatment (S01) and after heat treatment at 500°C (S02), respectively, and the results are as follows.

**[Table 2]**

| | room temperature tensile strength (MPa) | room temperature elongation (%) | 500°C tensile strength (MPa) | 500°C elongation (%) |
|---|---|---|---|---|
| comparative example | 322 | 25.8 | 138 | 55.0 |
| first embodiment | 355 (+33) | 26.5 (+0.7) | 180 (+42) | 52.0 (-3) |
| second embodiment | 348 (+26) | 29.5 (+3.7) | 158 (+20) | **62.0** (+7) |

Specifically, compared to the comparative example, both the can materials of the first embodiment and the second embodiment showed increased room temperature strength and high-temperature strength. In addition, compared to the comparative example, both the can materials of the first embodiment and the second embodiment showed increased room temperature elongation. As described above, the carbon steel material of the can for secondary batteries according to the embodiment is capable of securing the formability of the material by improving the room temperature strength while increasing the room temperature elongation rather than degrading the same. In addition, the high-temperature strength may be further increased, which may further enhance the safety of the metal can that may undergo thermal runaway.

In addition, it is confirmed that the can material of the first embodiment has an increase rate of high-temperature strength higher than that of room temperature strength, which may further enhance the high-temperature strength compared to the increased difficulty of processing the can. Although the high-temperature elongation was slightly lower in the first embodiment, the safety required in the thermal runaway may be further enhanced as the high-temperature tensile strength was further increased.

Meanwhile, the can material according to the second embodiment also has an increase rate of high-temperature strength higher than that of room-temperature strength, and not only does the room-temperature elongation increase, but the high-temperature elongation increases even further such that the elongation margin of the can for the high internal pressure of the can occurring during thermal runaway may be increased, thereby further securing the fracture resistance of the can.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A metal can sheet for a secondary battery made of a carbon steel whereto Nb is added in a ratio of 0.05 wt% or higher and 0.10 wt% or lower.

2. The metal can sheet of claim 1, wherein Nb is added to the carbon steel in a ratio of 0.05 wt% or higher and 0.09 wt% or lower.

3. The metal can sheet of claim 2, wherein Nb is added to the carbon steel in a ratio of 0.05 wt% or higher and 0.07 wt% or lower.

4. The metal can sheet of claim 1, wherein a ratio of C contained in the carbon steel is 0.01 wt% or higher and 0.100 wt% or lower.

5. The metal can sheet of claim 4, wherein the ratio of C contained in the carbon steel is 0.02 wt% or higher and 0.07 wt% or lower.

6. The metal can sheet of claim 5, wherein the ratio of C contained in the carbon steel is 0.03 wt% or higher and 0.05 wt% or lower.

7. The metal can sheet of claim 1, wherein the carbon steel further contains Mn, and a ratio of Mn contained in the carbon steel is 0.1 wt% or higher and 0.5 wt% or lower.

8. The metal can sheet of claim 7, wherein the ratio of Mn contained in the carbon steel is 0.15 wt% or higher and 0.3 wt% or lower.

9. The metal can sheet of claim 1, wherein the carbon steel further contains Si, and a ratio of Si contained in the carbon steel is more than 0.001 wt% and 0.5 wt% or lower.

10. The metal can sheet of claim 9, wherein the ratio of Si contained in the carbon steel is 0.01 wt% or higher and 0.02 wt% or lower.

11. A metal can manufactured by subjecting a metal can sheet of any one of claims 1 to 10 to deep drawing.

12. A secondary battery comprising a metal can of claim 11; and
an electrode assembly accommodated in the metal can.
